Europäisches Patentamt

**European Patent Office**

**Office européen des brevets**

(11) Publication number: **0 083 149**
**A2**

(12)

# EUROPEAN PATENT APPLICATION

(21) Application number: **82305135.4**

(22) Date of filing: **29.09.82**

(51) Int. Cl.³: **G 01 N 1/00**

(30) Priority: **29.09.81 DE 3138642**

(43) Date of publication of application:
**06.07.83 Bulletin 83/27**

(84) Designated Contracting States:
**AT BE CH DE FR GB LI LU NL SE**

(71) Applicant: **COLT INTERNATIONAL HOLDINGS A.G.**
**Baarerstrasse 59**
**CH-6300 Zug(CH)**

(84) Designated Contracting States:
**BE CH DE FR LI LU NL SE AT**

(71) Applicant: **COLT INTERNATIONAL LIMITED**
**New Lane**
**Havant Hampshire PO9 2LY(GB)**

(84) Designated Contracting States:
**GB**

(72) Inventor: **Schuster, Herm Christian**
**Haher Strasse 5**
**D-4220 Dinslaken(DE)**

(72) Inventor: **Weinert, Bernd**
**Emmericher Strasse 20**
**D-4190 Kleve(DE)**

(74) Representative: **Slight, Geoffrey Charles et al,**
**Graham Watt & Co. Riverhead**
**Sevenoaks Kent TN13 2BN(GB)**

(54) **Rain sensor.**

(57) A rain sensor 1 has an insultating carrier plate 2 and a plurality of conductor paths (8, 9, 10, 11, 12) disposed on the carrier plate. The plate 2 is of temperature resistant and acid resistant plastics material which is resistant to ultra violet light. The conductor paths (8, 9, 10, 11, 12) consist of an electrically conductive plastics material and have plane surface termination with the surface of the carrier plate. The conductor paths are combined in two groups which are electrically connected between themselves to form electrodes (3, 4) but electrically separated from one another with close interlacing for sensing the onset of rain. One of the groups of electrodes forms a conductor path loop (3) designed as a heating conductor with two connections (5, 6) at its ends. The counter electrode 4 consists of two comb shapes (11, 12) engaging in one another in opposite directions while the heating electrode follows a meandering path between the teeth of the combs.

Fig.I.

RAIN SENSOR

The invention relates to a rain sensor having an insulating carrier plate and a plurality of conductor paths disposed on the carrier plate which are combined into two groups of electrodes which are electrically connected between one another but electrically separated from one another with close interlacing.

Rain sensors are used, in particular, for control and regulating purposes, for example for the control of ventilators in buildings and should give a reliable signal of precipitation occurring. Since they are exposed to atmospheric influences for this purpose, they are subject to corrosion in continuous service. In particular, however, they can only be used if they give an appropriate signal on onset of precipitation, even under difficult conditions, and do not fail, for example due to icing up or give false signals in the case of dew.

A rain sensor of the kind indicated at the beginning which has already been used in practice is constructed essentially in the manner of a "printed" circuit board, common in the electronic field, in that a carrier plate of glass-fibre reinforced plastics material carries comb-shaped conductors. Such a plate is disposed on the top of a housing and heated from below so that a reliable signal can be achieved even in the case of ice, snow and dew. For this purpose, the plate is connected to a separate heating element.

The connection to a heating element is expensive in equipment and unreliable, and in addition, the metal conductor paths are liable to disturbance as a result of atmospheric influences. Destructive influences result on the conductor paths in long-term operation, both in the sense of destruction of the conductors caused by corrosion and in the form of short-circuits between conductors which are usually etched, so that high reliability for the typical field of use of devices reacting automatically to atmospheric influences is not adequately met.

It is the object of the invention to eliminate the above-mentioned difficulties and to provide a simpler and more robust rain sensor.

According to the invention, this problem is solved, starting from a rain sensor of the kind designated at the beginning with the characterising features of claim 1.

With a continuous conductor path loop it is made possible to heat the plate directly, that is to say _via_ the conductor path itself and so to exclude uncertainties in the former indirect heating in the sense of a particularly reliable precipitation signal. Thus disturbances caused by corrosion in the region of the heating/plate are also eliminated and above all the design is simplified as regards equipment, wherein separate heating devices under the plate can be omitted and the plate is made suitable to form, by itself, a complete sensor for direct connection to corresponding signal and supply lines.

From this point of view, the replacement of the previous metallic conductor path material by plastics material capable of electrical conduction has also proved particularly advantageous, as a result of which the development of corrosion and also the formation of short-circuit bridges can be decisively reduced. In the same sense, it has proved helpful to make the carrier plate of temperature-resistant and acid resistant plastics material which is resistant to ultra violet light, so as to provide a rain sensor which is capable of resisting the influences of the weather and atmosphere.

Further features and advantages of the invention are apparent from the claims and the following description in which specific embodiments of the invention are described in detail with reference to drawings. The two figures of drawing each show a rain sensor carrier plate according to the invention as seen from above.

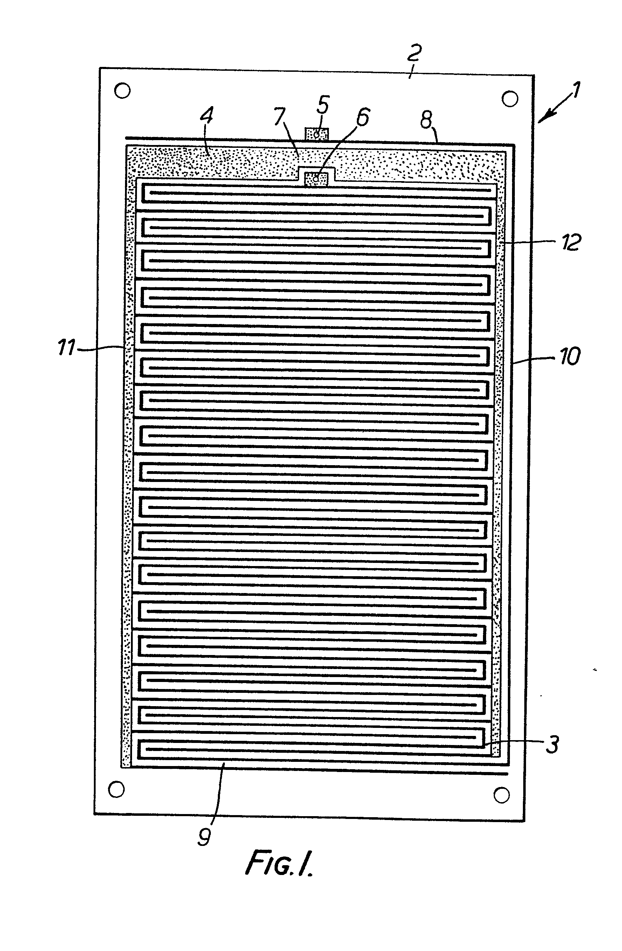

The rain sensor plate illustrated in Figure 1 and designated as a whole by 1 consists of a carrier plate 2 of highly heat resistant and acid-resistant plastics material which is resistant to ultra violet light. The dimensions of the plate are about 100 x 170 mm, holes for screw mounting being machined in the corners. Apart from an encircling marginal region, the plate is occupied by a dense pattern of narrow conductor paths which extend substantially parallel to one another and which in their main alignment, extend parallel to the narrow sides of the carrier plate 2. These conductor paths are constructed coherently with one another, however, so that altogether only two conductor-path groups, separated from one another, result as electrodes, namely a heating electrode 3 and a counter electrode 4. The heating electrode has two connection points 5 and 6, disposed in the region of widened soldering surfaces or soldering lugs, and the counter electrode 4 has one connection point 7 in the region of a conductor path which is widened as a whole. All three connection points 5, 6, 7 lie close together near the middle of one of the two narrow sides of the carrier plate 2.

The conductor paths of the heating electrode 3 are constructed continuously in meandering form, in that they lead from a first conductor path 8 contacting the connection point 6 winding to the opposite side of the carrier plate 2 with a last conductor path 9 and from there return (along a narrow side of the carrier plate 2) with a connecting return conductor path 10 running round the outside of the connection point 5. Thus, between the connection points 5 and 6, a loop is provided which, with a flow of current in the loop, enables Joule's heat losses to be produced and so the plate to be heated.

At the same time, however, an elongated line results with correspondingly long electrode edges, opposite which lies the counter electrode 4. The counter electrode 4 can be understood to be composed of two comb-like electrodes, the backs of the combs of which extend along one of the two long sides of the carrier plate 2. A first comb back 11 lies at the left-hand side of the Figure and a second comb back 12 lies at the right-hand side of the Figure

and the conductor paths of the counter electrode 4, projecting in the manner of comb teeth into the field of conductor paths almost to the opposite comb back, are staggered alternately in relation to one another so that they engage, with slight spacing from the heating electrode 3, into its meandering loops alternately from one side and then from the other.

Thus, despite the additional requirement in the design of the conductor plate that at least one electrode should form a continuous heating loop, an arrangement is achieved wherein the linear conductor paths of each electrode have the predetermined short spacing from the other electrode, practically over their whole length and at both sides, as a result of which a high response sensitivity of the rain sensor results with a compact spatial arrangement.

The conductor paths are formed from plastics material which is capable of conducting electricity so that they are extremely resistant to the weather and in addition, with a total resistance of 70 ohms for example present favourable connection values for the current supply of the heating means.

In addition, the paths for the conductors are machined in the carrier plate 2 so that the conductors lie flush with the surface of the plate to form a plane surface termination, as a result of which, _inter alia_, dirt is prevented from settling on the plate and bridges caused by corrosion are prevented from forming from one conductor path to another. This benefits the operational reliability and durability of the rain sensor.

The smooth-surfaced plate thus formed merely has to be appropriately connected up in order to obtain the desired heating between the connection points 5 and 6 and the monitoring of precipitation between one of the two connection points and the connection point 7 of the counter electrode.

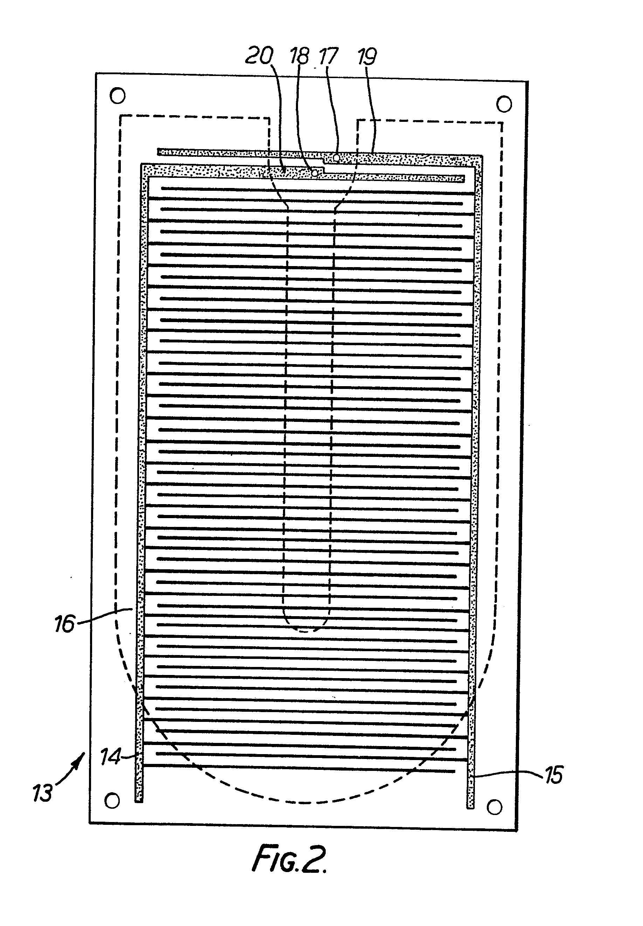

Figure 2 shows a rain sensor plate 13, the surface of which is designed with the basic structure of conventional rain sensor plates in mind, that is to say with two comb-like electrodes 14, 15 interengaging in opposite alignment. Here, however, the material of the plate and the conductor paths is preferably selected as in the embodiment described above and in particular is constructed to form a plane surface termination.

This rain sensor plate 13 also has a heating conductor 16 which is integrally connected to the rain sensor plate 13 but is disposed on the under-side of the plate. The outline of the conductor path forming the heating conductor 16 is represented by a broken line and illustrates a simple horseshoeshaped conductor path loop with a width which occupies nearly half the transverse extent of the rain sensor plate 13. In comparison with the embodiment shown in Figure 1, the limited disadvantages of the processing of the plate on both sides are counteracted by the often indispensible advantages that the heating conductor can be designed independently of the electrode structure with regard to material, path and dimensions. In addition to this, the heating conductor lies on the under-side of the plate, which is protected from the weather. Thus it is also possible to select a less weather-resistant material for the heating conductor, so that there is greater freedom in form than in the embodiment shown in Figure 1 for the design of such a plate.

Contact can be made directly to the heating conductor loop 16 at the under-side by any suitable lead. The comb electrodes 14, 15 on the upper side of the plate are contacted by conductors which run from below through holes 17, 18 and are soldered to end portions 19, 20 of the comb electroces 14, 15 which are widened out like soldering lugs. In this region, the heating conductor path 16 is taken back to the outside at the under side in order to eliminate erroneous contacts.

The carrier plate 2 in each case may be comprised of a hydroscopic phenolharz-hardpaper-plastics mixture manufactured by RUF of Munich, Federal Republic of Germany, under the code LB 942/80.

Electrically conductive plastics materials are now available from a number of manufacturers. Such electrically conductive plastics materials may be metal filled plastics. Typically finely divided silver, gold, copper or carbon graphite are used as the filler and such fillers may be dispersed in amounts up to 80% by weight in resin/hardener systems to provide material suitable to form plastics conductors for use in the present invention.

CLAIMS:

1.    A rain sensor having an insulating carrier plate and a plurality of conductor paths disposed on the carrier plate which are combined into two groups of electrodes which are electrically connected between themselves but electrically separated from one another with close interlacing, characterised in that the carrier plate (1,13) is provided with a conductor path loop (3,16) designed as a heating conductor with two connections at the ends.

2.    A rain sensor as claimed in claim 1, characterised in that the conductor path loop (3,16) and the electrodes (14,15) are disposed on opposite faces of the carrier plate (13).

3.    A rain sensor as claimed in claim 1, characterised in that the conductor path loop (3) of the heating conductor forms one of the electrodes at the same time.

4.    A rain sensor as claimed in claim 3, characterised in that the heating electrode (3) follows a meandering path and the counter electrode (4) has a comb-shaped basic shape and lies with its teeth in the loops of the heating electrode.

5.    A rain sensor as claimed in claim 4, characterised in that the counter electrode (4) consists of two comb shapes (11,12) engaging in one another in opposite directions, while the heating electrode (3) follows a meandering path between the teeth of the comb shapes.

6. A rain sensor as claimed in any one of claims 1 to 5, characterised in that the conductor paths (8,9,10,11,12) consist of an electrically conductive plastics material.

7. A rain sensor as claimed in any one of claims 1 to 6, characterised in that the carrier plate (2) consists of temperature-resistant and acid-resistant plastics material which is resistant to ultra violet light.

8. A rain sensor as claimed in claims 6 or 7, characterised in that the conductor paths (8,9,10, 11,12) have a plane surface termination with the surface of the carrier plate (2).

FIG.1.

FIG.2.